# EUROPEAN PATENT SPECIFICATION

(11) **EP 2 899 237 B1**
(45) Date of publication and mention of the grant of the patent: **22.07.2020**
(21) Application number: 13838109.0
(22) Date of filing: 19.09.2013
(51) Int. Cl.: C08L 101/00, C08F 299/08, C08K 3/22, C08L 23/00, C08L 31/04, C08L 83/07, H01B 3/00, H01B 3/44, H01B 7/02, H01B 7/295, H01B 3/46

(54) **FLAME-RETARDANT RESIN COMPOSITION, FLAME-RETARDANT HEAT SHRINKABLE TUBE AND FLAME-RETARDANT INSULATED WIRE**
FLAMMHEMMENDE HARZZUSAMMENSETZUNG, FLAMMHEMMENDER SCHRUMPFSCHLAUCH UND FLAMMHEMMENDER ISOLIERTER DRAHT
COMPOSITION DE RÉSINE RETARDATRICE DE FLAMME, TUBE THERMORÉTRACTABLE RETARDATEUR DE FLAMME ET FIL ISOLÉ RETARDATEUR DE FLAMME

(30) Priority: 20.09.2012 JP 2012206742
(43) Date of publication of application: 29.07.2015
(73) Proprietor: Sumitomo Electric Industries, Ltd., Osaka-shi, Osaka 541-0041 (JP); Sumitomo Electric Fine Polymer, Inc., Sennan-gun, Osaka 590-0458 (JP)
(72) Inventor: FUJITA, Taro, Osaka-shi Osaka 554-0024 (JP); HAYAMI, Hiroshi, Osaka-shi Osaka 554-0024 (JP); NISHIKAWA, Shinya, Osaka-shi Osaka 554-0024 (JP); OKABE, Shohei, Sennan-gun Osaka 590-0458 (JP)
(74) Representative: Boult Wade Tennant LLP
(86) International application number: PCT/JP2013/075265
(87) International publication number: WO 2014/046165

(56) References cited:
- EP-A1- 1 593 652
- JP-A- H06 256 567
- JP-A- 2000 219 814
- JP-A- 2000 239 453
- JP-A- 2002 097 319
- JP-A- 2003 128 939
- JP-A- 2003 311 855
- JP-A- 2004 250 676

## Description

The present invention relates to a halogen-free flame-retardant resin composition used for heat-shrinkable tubes that are used in internal wirings of railway vehicles or the like and insulation protection of the internal wirings, in printable tubes that can be used as labels for discriminating between wires, the printable tubes each being produced by printing letters on a surface of a heat-shrinkable tube and being arranged to cover an internal wiring, or in heat-shrinkable tubes for insulation protection of bus-bars used in electrical junction boxes installed in buildings, factories, etc. Furthermore, the present invention relates to a flame-retardant heat-shrinkable tube composed of the flame-retardant resin composition, and a flame-retardant insulated electric wire coated with the flame-retardant resin composition in an insulating manner.

### Background Art

Insulated electric wires used in internal wirings of railway vehicles or the like and heat-shrinkable tubes for insulation protection of such insulated electric wires, printable tubes for discriminating between wires, the printable tubes each being produced by printing letters on a surface of a heat-shrinkable tube, and heat-shrinkable tubes used for insulation protection of bus-bars used in electrical junction boxes installed in buildings, factories, etc. require high flame retardancy and a low fuming property during combustion. Accordingly, resin compositions that constitute these tubes or the like also require high flame retardancy. Furthermore, the printable tubes require not only flame retardancy and a low fuming property during combustion but also good print quality and good printability.

A widely known halogen-free flame-retardant resin composition that combines high flame retardancy with a low fuming property is a composition prepared by mixing a metal hydroxide serving as a flame retardant with a thermoplastic resin such as a polyolefin. For example, PTL 1 discloses a heat-shrinkable tube composed of a halogen-free flame-retardant resin composition prepared by magnesium hydroxide with a polyolefin resin such as an ethylene-vinyl acetate copolymer.

In addition, PTL 2 describes "a halogen-free flame-retardant heat-shrinkable tube comprising an outer layer containing, as a main component, a polyolefin resin prepared by mixing 100 to 250 parts by weight of a metal hydroxide or a metal hydroxide which has been subjected to a surface treatment with a silane coupling agent relative to 100 parts by weight of a polyolefin resin; and an inner layer containing, as a main component, a polyolefin resin prepared by mixing 100 to 250 parts by weight of a metal hydroxide which has been subjected to a surface treatment with an anionic surfactant relative to 100 parts by weight of a polyolefin resin, wherein a thickness of the outer layer is 50% or less of a total thickness" (Claim 1). Magnesium hydroxide is described as an example of the metal hydroxide. It is described that, due to the two-layer structure, a heat-shrinkable tube having not only good flame retardancy and processability but also good print quality and good printability can be obtained.

### Citation List

### Patent Literature

PTL 1: Japanese Unexamined Patent Application Publication No. 63-77958
PTL 2: Japanese Patent No. 3927855

### Summary of Invention

### Technical Problem

However, since the flame-retardant effect of metal hydroxides is not so high, it is necessary to increase a mixing proportion of a metal hydroxide in a resin composition in order to achieve high flame retardancy. For example, in BS6853 of the material standards for compartments, the standards being specified by the British Standards Institution and adopted as a standard specification for railway vehicles in Europe, an oxygen index of 34 or more, the oxygen index being an indicator of flame retardancy, is required for a heat-shrinkable tube used in railway vehicles. To achieve this, it is necessary to incorporate 200 parts by mass or more of a metal hydroxide relative to 100 parts by mass of a resin in a resin composition.

However, in the case where a heat-shrinkable tube is formed by using a resin composition having a high mixing proportion of a metal hydroxide, problems such as an increase in the torque during extrusion molding and an increase in the variation in the outer diameter occur. As a result, a linear speed during extrusion molding cannot be increased, resulting in a problem that it is difficult to produce a heat-shrinkable tube at a low cost. Furthermore, with an increase in the mixing proportion of a metal hydroxide, a problem of a decrease in a mechanical strength, such as a tensile strength, of a heat-shrinkable tube occurs. Therefore, regarding a halogen-free flame-retardant resin composition prepared by mixing a metal hydroxide with a thermoplastic resin, a method in which the mixing proportion of the metal hydroxide can be reduced while maintaining good flame retardancy has been desired. Furthermore, for a marking tube produced by conducting a printing process on a surface of a tube, good print quality and good printability are further required. However, regarding the method for forming the two-layer structure described in PTL 2, the production process becomes complicated.

An object of the present invention is to provide a halogen-free flame-retardant resin composition containing a metal hydroxide functioning as a flame retardant, in which a mixing proportion of the metal hydroxide can be reduced while maintaining good flame retardancy, in particular, a high oxygen index. Another object of the present invention is to provide a flame-retardant resin composition that further has good print quality and good printability. Another object of the present invention is to provide a halogen-free flame-retardant heat-shrinkable tube formed by using the flame-retardant resin composition and used for, for example, forming an insulating coating of an insulated electric wire, and a flame-retardant insulated electric wire including an insulating coating formed by using the flame-retardant resin composition as a material.

### Solution to Problem

The inventor of the present invention conducted intensive studies in order to achieve the above objects. As a result, it was found that flame retardancy can be improved by further mixing, in a particular proportion, a silicone, an end of which is modified with a compound having a carbon-carbon double bond, such as a vinyl group, with a flame-retardant resin composition prepared by mixing a metal hydroxide with a thermoplastic resin, and therefore, a mixing proportion of the metal hydroxide can be reduced while maintaining good flame retardancy, problems in the related art, such as an increase in the torque during extrusion molding and a decrease in a mechanical strength, can be suppressed, and good print quality and good printability can also be maintained. These findings resulted in the completion of the present invention.

The subject-matter of the present invention is defined in claims 1-9 as attached. An invention according to Claim 1 provides a flame-retardant resin composition containing a thermoplastic resin; a metal hydroxide; and a modified silicone having, at an end thereof, a functional group having a carbon-carbon double bond (hereinafter may be referred to as "vinyl-modified-end silicone"), in which a content of the metal hydroxide is 85 to 190 parts by mass relative to 100 parts by mass of the thermoplastic resin, and a content of the modified silicone is 0.05% to 5% by mass relative to the metal hydroxide.

The flame-retardant resin composition of the present invention is characterized in that the composition contains, in addition to a thermoplastic resin and a metal hydroxide, a vinyl-modified-end silicone in an amount of 0.05% to 5% by mass relative to the metal hydroxide. By mixing the vinyl-modified-end silicone, high flame retardancy can be maintained even when the mixing proportion of the metal hydroxide is reduced. In particular, a high oxygen index required for, for example, a heat-shrinkable tube and an internal wiring of railway vehicles can be maintained even when the mixing proportion of the metal hydroxide is reduced. Accordingly, since the mixing proportion of the metal hydroxide can be reduced, problems such as an increase in the torque during extrusion molding and the variation in the outer diameter can be solved, and the production cost can be reduced. In addition, a decrease in the mechanical strength, for example, a decrease in the tensile strength, due to incorporation of a metal hydroxide can also be suppressed. Furthermore, good print quality and good printability can be maintained.

As for the thermoplastic resin, it is possible to use non-halogen resins that can be subjected to extrusion molding and that have been hitherto used as materials constituting a heat-shrinkable tube and an insulating coating of an insulated electric wire. Examples of the thermoplastic resin include polyolefins.

Among polyolefins, polyolefins having good flame retardancy are preferable as the thermoplastic resin. According to the present invention ethylene-vinyl acetate copolymers (EVA) are used as thermoplastic resins. Ethylene-vinyl acetate copolymers (EVA) also have good print quality and good printability, and thus are used from this viewpoint. However, since EVA is more expensive than polyethylene, a mixture of EVA and polyethylene may be used in order to achieve not only flame retardancy, print quality, and printability but also the cost. According to the present invention the thermoplastic resin is a mixture containing an ethylene-vinyl acetate copolymer and polyethylene in a range of 30:70 to 100:0. In order to make use of the above good properties of EVA, an invention according to Claim 2 provides the flame-retardant resin composition, in which the thermoplastic resin is an ethylene-vinyl acetate copolymer (EVA).

The thermoplastic resin is preferably a thermoplastic resin in which an increase in the torque during extrusion molding is relatively small (that is, which has good extrusion processability) and which provides a good mechanical strength to an insulating coating. From the viewpoint of extrusion processability, a thermoplastic resin having a melt flow rate (MFR) in the range of 0.1 to 10 g/10 min (measurement conditions: JIS K7210:1999) is preferable.

Examples of the metal hydroxide include magnesium hydroxide, aluminum hydroxide, and calcium hydroxide. Among these, magnesium hydroxide and aluminum hydroxide, which have a particularly high flame retardant effect, are preferable. An invention according to Claim 3 provides the flame-retardant resin composition according to any one of Claims 1 to 2, in which the metal hydroxide is magnesium hydroxide or aluminum hydroxide.

In the flame-retardant resin composition of the present invention, the content of the metal hydroxide is 85 to 190 parts by mass relative to 100 parts by mass of the thermoplastic resin. When the content of the metal hydroxide is less than 85 parts by mass relative to 100 parts by mass of the thermoplastic resin, sufficient flame retardancy cannot be obtained even in the case where a vinyl-modified-end silicone is mixed. On the other hand, when the content of the metal hydroxide exceeds 190 parts by mass relative to 100 parts by mass of the thermoplastic resin, not only extrusion processability significantly deceases but also a mechanical strength significantly decreases in the case where the metal hydroxide is mixed in an insulating coating.

An invention according to claim 4 provides the flame-retardant resin composition according to claim 3, in which the content of the metal hydroxide is 100 to 180 parts by mass relative to 100 parts by mass of the thermoplastic resin. An invention according to claim 5 provides the flame-retardant resin composition according to claim 4, in which the content of the metal hydroxide is 100 to 140 parts by mass relative to 100 parts by mass of the thermoplastic resin.

In order to obtain good flame retardancy of the resin composition, the content of the metal hydroxide is preferably 100 parts by mass or more relative to 100 parts by mass of the thermoplastic resin. On the other hand, in order to suppress a decrease in extrusion processability and a decrease in a mechanical strength, the content of the metal hydroxide is preferably 180 parts by mass or less, and more preferably 140 parts by mass or less relative to 100 parts by mass of the thermoplastic resin.

In the vinyl-modified-end silicone, the term "functional group having a carbon-carbon double bond and bonded to an end of a silicone" refers to a functional group represented by the following formula:

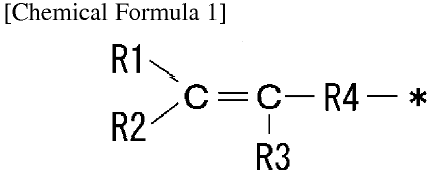

In Formula 1, R1, R2, and R3 each independently represent hydrogen or a monovalent group such as an alkyl group, R4 represents a direct bond or a divalent group such as an alkylene group, -O-, -S-, -CH₂-CO-, or -COO-, and * represents a bonding portion with an end of a silicone.

The term "silicone" refers to a polymer having a main skeleton having a siloxane bond. According to the present invention a silicone having a molecular weight of 1,000 to 3,000 is used as the vinyl-modified-end silicone contained in the flame-retardant resin composition of the present invention.

The amount of vinyl-modified-end silicone mixed is in the range of 0.05 to 5 parts by mass relative to 100 parts by mass of the metal hydroxide (0.05% to 5% by mass relative to the metal hydroxide). When the amount mixed is less than 0.05% by mass, it is difficult to obtain the effect of improving flame retardancy due to the addition of the vinyl-modified-end silicone, that is, the effect of capable of reducing the amount of metal hydroxide mixed while maintaining good flame retardancy such as a high oxygen index. On the other hand, when the amount mixed exceeds 5% by mass, a mechanical strength of a molded body formed by using the flame-retardant resin composition decreases, and a standard for a tensile strength for a heat-shrinkable tube may not be satisfied.

An invention according to claim 6 provides a flame-retardant heat-shrinkable tube obtained by inflating a tubular molded body in a radial direction, the tubular molded body being composed of the flame-retardant resin composition according to any one of Claims 1 to 5. An invention according to claim 7 provides the flame-retardant heat-shrinkable tube according to claim 6, in which a printing process is performed on a surface of the tube.

The term "heat-shrinkable tube" refers to a resin tube that is shrunk by heating in the radial direction. The heat-shrinkable tube can be used for insulation and water-proof protection of a connecting portion of an electric wire.

As in the case of an existing heat-shrinkable tube, the flame-retardant heat-shrinkable tube of the present invention can be produced by molding the flame-retardant resin composition of the present invention into a tube to prepare a molded body, cross-linking a resin of the tubular molded body, inflating the molded body in the radial direction at a temperature equal to or higher than the melting point of the molded body, and then cooling the molded body.
Since the flame-retardant heat-shrinkable tube of the present invention is formed by using the flame-retardant resin composition of the present invention, the flame-retardant heat-shrinkable tube has good flame retardancy. Accordingly, the flame-retardant heat-shrinkable tube of the present invention can be suitably used in insulation and water-proof protection of a connecting portion of an electric wire, a cable, or the like. Furthermore, regarding a tube subjected to a printing process in which letters or figures are printed with an ink on a surface of the flame-retardant heat-shrinkable tube of the present invention, the printed letters or the like are sharp, and do not disappear even after rubbing, and thus the tube can be suitably used as, for example, a marking tube for discriminating between wires.

An invention according to claim 8 provides a flame-retardant insulated electric wire including an insulating coating formed by using the flame-retardant resin composition according to any one of claims 1-5. An invention according to claim 9 provides the flame-retardant insulated electric wire according to claim 8, in which a printing process is performed on a surface of the electric wire.

An insulating coating of the flame-retardant insulated electric wire of the present invention is formed by using the flame-retardant resin composition of the present invention. Accordingly, the insulated electric wire includes an insulating coating having good flame retardancy and exhibits, for example, a high oxygen index. The flame-retardant insulated electric wire of the present invention can be produced by, for example, coating a conductor composed of copper, aluminum, or the like with the flame-retardant resin composition of the present invention by extrusion. Furthermore, regarding an electric wire subjected to a printing process in which letters or figures are printed with an ink on a surface of the flame-retardant insulated electric wire of the present invention, the printed letters or the like are sharp, and do not disappear even after rubbing, and thus the electric wire can be suitably used as, for example, an insulated electric wire that can be discriminated from other insulated electric wires. Herein, the meaning of the term "insulated electric wire" also covers a cable coated with an insulating material.

Accordingly, the flame-retardant heat-shrinkable tube and the insulated electric wire of the present invention have good flame retardancy and exhibit, for example, a high oxygen index. The flame-retardant heat-shrinkable tube and the insulated electric wire of the present invention also have good print quality and good printability. Consequently, they can be suitably used as heat-shrinkable tubes for internal wirings of railway vehicles or the like and insulation protection of the internal wirings, printable tubes that can be used as labels, the printable tubes each being produced by printing letters on a surface of a heat-shrinkable tube and being arranged to cover an internal wiring, and heat-shrinkable tubes for insulation protection of bus-bars used in electrical junction boxes installed in buildings, factories, etc.

### Advantageous Effects of Invention

The flame-retardant resin composition of the present invention has good flame retardancy and can exhibit, for example, a high oxygen index. In addition, the mixing proportion of a metal hydroxide can be reduced while maintaining high flame retardancy. As a result, an increase in the torque during extrusion molding and a decrease in the mechanical strength can be suppressed. The flame-retardant heat-shrinkable tube and the flame-retardant insulated electric wire of the present invention have good flame retardancy and exhibit, for example, a high oxygen index. Furthermore, the flame-retardant resin composition, the flame-retardant heat-shrinkable tube, and the flame-retardant insulated electric wire of the present invention have good print quality and good printability, and can be subjected to a printing process in which the printed letters are sharp and do not disappear even after rubbing is performed.

### Description of Embodiments

The present invention will now be described by using embodiments and Examples thereof. However, the present invention is not limited to the embodiments and Examples described below.

In a vinyl-modified-end silicone, examples of a functional group having a carbon-carbon double bond and bonded to an end of a silicone include -CH=CH₂, -OCO-C(CH₃)=CH₂ (methacrylate group), and -OCO-CH=CH₂ (acrylate group). Among these, an acrylate group and a methacrylate group are preferable. Examples of the vinyl-modified-end silicone include those descried in Japanese Unexamined Patent Application Publication No. 2005-132855. A commercially available product such as TEGOMER V-Si4042 (manufactured by EVONIK Industries) can also be used as the vinyl-modified-end silicone.

Examples of a thermoplastic resin that can be used in the present invention include known polymers such as polyethylene, ethylene-ethyl acrylate copolymers (EEA), ethylene-methyl acrylate copolymers (EMA), and ethylene-methyl methacrylate copolymers (EMMA) besides ethylene-vinyl acetate copolymers (EVA). Polyolefins subjected to an acid anhydride modification, a carboxylic acid modification, or the like can also be used.

A metal hydroxide such as magnesium hydroxide, aluminum hydroxide, or calcium hydroxide preferably has a particle diameter in the range of 0.1 to 5.0 µm. In particular, from the viewpoints of dispersibility in a resin and flame retardancy and a mechanical strength when the metal hydroxide is dispersed, a metal hydroxide having a particle diameter in the range of 0.5 to 2.0 µm is preferably used. Metal hydroxides that have been subjected to a surface treatment with a silane coupling agent, and metal hydroxides that have been subjected to a surface treatment with an anionic surfactant can also be used.

In order to improve various properties, polymers such as ethylene propylene diene rubber (EPDM), ethylene-acrylic rubber, polyolefin elastomers, or styrene-based elastomers can be blended with a flame-retardant resin composition of the present invention as long as properties such as flame retardancy and mechanical physical properties are not impaired. Furthermore, various additives such as an antioxidant, a lubricant, a process stabilizer, a colorant (color pigment), a foaming agent, a reinforcing agent, a filler such as calcium carbonate or talc, and a polyfunctional monomer (cross-linking aid) may be blended.

A flame-retardant heat-shrinkable tube of the present invention can be produced by a method including a step of molding a flame-retardant resin composition of the present invention into a tube to prepare a molded body (molding step), a step of cross-linking a resin of the tubular molded body (cross-linking step), and a step of inflating the cross-linked resin tube in the radial direction (inflation step). The molding step is performed by extrusion molding. This extrusion molding may be performed by a known method that is usually used for producing an existing heat-shrinkable tube.

The cross-linking step is performed in order to exhibit shrinking properties of a heat-shrinkable tube. A method for cross-linking a resin is preferably a method in which a resin is irradiated with radiation (irradiation cross-linking of a resin). After a resin is cross-linked by irradiation with radiation, molding is difficult to perform. Therefore, the irradiation with radiation (cross-linking step) is performed after extrusion molding (molding step). Since the irradiation with radiation is performed after extrusion molding, the molding can be easily performed and the effect caused by the irradiation with radiation can be sufficiently obtained.

Examples of the radiation used in the irradiation cross-linking of a resin include electron beams, X-rays, γ-rays, and particle beams. Among the radiations, electron beams are preferably used because electron-beam generators have low operating costs, provide electron beams at high outputs, and can be easily controlled.

The dose of radiation is not particularly limited. However, when the dose of radiation is excessively high, a decomposition reaction becomes dominant over a cross-linking reaction, and the degree of cross-linking may decrease and the strength may decrease instead. On the other hand, when the dose of radiation is excessively low, the degree of cross-linking necessary for exhibiting shrinking properties of a heat-shrinkable tube may not be obtained. Accordingly, the dose of radiation is preferably selected as low as possible within a range where shrinking properties are sufficiently exhibited. The dose of radiation is preferably in the range of 10 to 300 kGy.

A known inflation method that is usually used for producing an existing heat-shrinkable tube can be used as a method for inflating a cross-linked tubular molded body. An example of the method includes heating a resin tube to a temperature equal to or higher than the melting point thereof, inflating the tube by applying an internal pressure (pressure inside the tube), and then cooing the tube.

An example of a method for forming an insulating coating of a flame-retardant insulated electric wire of the present invention is a method in which a conductive wire composed of copper or the like is coated with the flame-retardant resin composition of the present invention by extrusion. An internal wiring of railway vehicles or automobiles may be used in a place that is exposed to a high temperature during use. Accordingly, after the coating with the flame-retardant resin composition is performed by extrusion, the flame-retardant resin composition is preferably cross-linked by irradiation with an electron beam or the like to suppress deformation at a high temperature.

### EXAMPLES

### <Examples and Comparative Examples>

Materials listed below were used. The materials were kneaded so as to have the compositions (mass ratios) shown in Table I using an open roll at 180°C. Each of the resulting kneaded products was then pelletized with a pelletizer. Subsequently, the resulting pellets were extruded by a 50-mm φ extruder into a tube having an inner diameter φ of 3 mm and an outer diameter φ of 4 mm (wall thickness of 0.5 mm). The tube was irradiated with an electron beam of 100 kGy, and a pressure was then applied to the inside of the tube at 150°C so as to inflate the tube in the radial direction until the outer diameter φ became 6 mm.

### (Materials used)

- Ethylene-vinyl acetate copolymer (denoted as "EVA" in Tables): Evaflex EV560 (manufactured by Du Pont-Mitsui Polychemicals Co., Ltd.)
- Low-density polyethylene: Sumikathene C215 (manufactured by Sumitomo Chemical Co., Ltd.)
- Magnesium hydroxide: KISUMA 5L (manufactured by Kyowa Chemical Industry Co., Ltd.)
- Aluminum hydroxide: Higilite H42STM (manufactured by Showa Denko K.K.)
- Antioxidant: IRGANOX 1010" (manufactured by BASF Japan Ltd.)
- Lubricant: Stearic acid
- Vinyl-modified-end silicone: TEGOMER V-Si4042 (manufactured by EVONIK Industries) •Dimethyl silicone: KF96-1000cs (manufactured by Shin-Etsu Chemical Co., Ltd.)
- Fatty acid ester: S-100A (manufactured by Riken Vitamin Co., Ltd.)

A tensile strength, a tensile elongation, flame retardancy (UL standards and oxygen index), print quality, and extrusion processability of each of the prepared tubes were evaluated. Evaluation methods are described below.

### (Tensile strength and tensile elongation)

A tube of 120 mm was prepared by cutting, and a tensile strength (strength at the time of breaking) and a tensile elongation (elongation at the time of breaking) were measured at a tensile speed of 500 mm/min. Regarding the criteria of acceptable and unacceptable levels, a sample having a tensile strength of 10.3 MPa or more and a tensile elongation of 150% or more was determined as "acceptable".

### (Flame retardancy-Oxygen index)

An oxygen index represents the lowest oxygen concentration necessary for maintaining combustion of a material (volume %, the lowest concentration of oxygen in a mixture of oxygen and nitrogen at which combustion of a material can be maintained). The oxygen index is standardized in JIS K 7201, and used as an indicator of how easily a material combusts. In Examples and Comparative Examples, the oxygen index was measured in accordance with JIS K 7201 (combustion test method of a polymer material using an oxygen index method). In general, an oxygen index of 30 or more is desired for a highly flame-retardant material. In particular, BS6853 of the material standards for compartments for railway vehicles provides a standard of an oxygen index of 34 or more.

### (Flame retardancy-UL standards)

A flame-retardant test for a plastic material, the test being standardized by Underwriter's Laboratories Inc. in the United States, was conducted to obtain reference data. A flame was applied to a sample and then removed. This procedure was repeated five times. When the flame expired within 60 seconds, the sample was evaluated as "acceptable". When the flame did not expire within 60 seconds, the sample was evaluated as "unacceptable". The results are shown in Tables I and II.

### (Print quality)

Letters and figures were printed on a surface of each of the prepared tubes using an ink ribbon TTR-100-300-BK-2020 (available from Siegrist Orel Ltd. in the United Kingdom). When the following conditions were satisfied, a sample was evaluated as "acceptable": It was easily confirmed by visual observation that the printed letters and figures were accurately copied. Furthermore, after a flat portion of an eraser was strongly pressed onto the printed portion with a human hand and the printed portion was rubbed 20 times, each of the printed letters remained sharp and it was easily confirmed by visual observation that the printed letters and figures were accurately copied. When the following conditions were satisfied, a sample was evaluated as "semi-acceptable": It was easily confirmed by visual observation that the printed letters and figures were accurately copied. However, after the printed portion was rubbed with an eraser 20 times, each of the printed letters became blurred and it was not easily confirmed by visual observation that the printed letters and figures were accurately copied. For the cases other than the above, a sample was evaluated as "unacceptable".

### (Extrusion processability)

A variation range of an outer diameter was measured with a laser outer-diameter measuring device. When the variation range of the outer diameter a sample was within a range of "design value ± 10%", the sample was evaluated as "acceptable".

**[Table I]**

| **Material** | Example 1 | Example 2 | Example 3 | Example 4 | Example 5 | Example 6 | Example 7 |
|---|---|---|---|---|---|---|---|
| EVA | 100 | 100 | 100 | 100 | | 30 | 100 |
| Low-density polyethylene | | | | | 100 | 70 | |
| Magnesium hydroxide | 100 | 180 | 100 | | 100 | 100 | 100 |
| Aluminum hydroxide | | | | 100 | | | |
| Antioxidant | 1 | 1 | 1 | 1 | 1 | 1 | 1 |
| Lubricant | 0.5 | 0.5 | 0.5 | 0.5 | 0.5 | 0.5 | 0.5 |
| Vinyl-modified-end silicone | 2.0 | 2.0 | 5.0 | 2.0 | 2.0 | 2.0 | 0.1 |
| Tensile strength (MPa) | 14.5 | 10.8 | 11.0 | 14.0 | 15.5 | 14.2 | 15.2 |
| Tensile elongation (%) | 300 | 250 | 280 | 320 | 200 | 240 | 320 |
| Oxygen index | 34 | 40 | 35 | 34 | 31 | 32 | 30 |
| UL standards | Acceptable | Acceptable | Acceptable | Acceptable | Unacceptable | Acceptable | Acceptable |
| Extrusion processability | Acceptable | Acceptable | Acceptable | Acceptable | Acceptable | Acceptable | Acceptable |
| Print quality | Acceptable | Acceptable | Acceptable | Acceptable | Unacceptable | Semi-acceptable | Acceptable |

**[Table II]**

| Material | Comparative Example 1 | Comparative Example 2 | Comparative Example 3 | Comparative Example 4 | Comparative Example 5 | Comparative Example 6 |
|---|---|---|---|---|---|---|
| EVA | | | | | 100 | 100 |
| Low-density polyethylene | 100 | 100 | 100 | 100 | | |
| Magnesium hydroxide | 100 | 100 | 100 | 80 | 200 | 100 |
| Aluminum hydroxide | | | | | | |
| Antioxidant | 1 | 1 | 1 | 1 | 1 | 1 |
| Lubricant | 0.5 | 0.5 | 0.5 | 0.5 | 0.5 | 0.5 |
| Vinyl-modified-end silicone | | | | 2.0 | 2.0 | 6.0 |
| Dimethyl silicone | | 2.0 | | | | |
| Fatty acid ester | | | 2.0 | | | |
| Tensile strength (MPa) | 16.2 | 15.2 | 15.5 | 15.6 | 9.9 | 10.1 |
| Tensile elongation (%) | 220 | 190 | 190 | 320 | 190 | 250 |
| Oxygen index | 27 | 27 | 28 | 28 | 42 | 36 |
| UL standards | Unacceptable | Unacceptable | Unacceptable | Unacceptable | Acceptable | Acceptable |
| Extrusion processability | Acceptable | Acceptable | Acceptable | Acceptable | Unacceptable | Acceptable |
| Print quality | Unacceptable | Unacceptable | Unacceptable | Unacceptable | Acceptable | Acceptable |

As shown in Tables I and II, regarding Examples 1 to 7, in which the content of a metal hydroxide was in the range of 85 to 190 parts by mass relative to 100 parts by mass of the thermoplastic resin and the content of a vinyl-modified-end silicone was 0.05% to 5% by mass relative to the metal hydroxide, the standards for the mechanical strengths (tensile strength and tensile elongation) were satisfied, flame retardancy was also good and the oxygen index exceeded 30, and the standard for extrusion processability was also satisfied. In particular, regarding Examples 1, 3, 4, 5, 6, and 7, although the content of the metal hydroxide was 100 parts by mass relative to 100 parts by mass of the thermoplastic resin, an oxygen index, which represents flame retardancy, exceeding 30 was exhibited. These results show that the content of a metal hydroxide can be reduced while maintaining flame retardancy. Regarding Examples 1 to 4 and Example 7, the print quality was also acceptable, showing that the print quality was also good.

Regarding Example 5 (=comparative example), in which low-density polyethylene was used as the thermoplastic resin, the oxygen index was lower than that of Example 1, in which the composition was the same as that of Example 5 except that an ethylene-vinyl acetate copolymer was used. The print quality was also unacceptable. Regarding Example 6, in which a mixture of an ethylene-vinyl acetate copolymer and low-density polyethylene was used as the thermoplastic resin, although flame retardancy was acceptable, the print quality was semi-acceptable. These results show that an ethylene-vinyl acetate copolymer is preferable as a polyolefin serving as a thermoplastic resin.

In contrast, regarding Comparative Examples 1 to 3, in which the content of the metal hydroxide was 100 parts by mass relative to 100 parts by mass of the thermoplastic resin and the vinyl-modified-end silicone was not contained, the oxygen index was low and flame retardancy that satisfied the standard was not obtained. Regarding Comparative Example 4, in which the vinyl-modified-end silicone was contained in the range of 0.05% to 5% by mass relative to the metal hydroxide but the content of the metal hydroxide was less than 85 parts by mass relative to 100 parts by mass of the thermoplastic resin, similarly, the oxygen index was low and flame retardancy that satisfied the standard was not obtained. In addition, each of Comparative Examples 1 to 4 did not satisfy the standard for the print quality.

Regarding Comparative Example 5, in which the content of the metal hydroxide exceeds 190 parts by mass relative to 100 parts by mass of the thermoplastic resin, and Comparative Example 6, in which the vinyl-modified-end silicone was contained in an amount exceeding 5% by mass relative to the metal hydroxide, although the standards for flame retardancy and print quality were satisfied, the mechanical strength (tensile strength) decreased and the standard was not satisfied.

## Claims

1. A flame-retardant resin composition comprising:
a thermoplastic resin;
a metal hydroxide; and
a modified silicone being a polymer having a main skeleton having a siloxane bond and having, at an end thereof, a functional group having a carbon-carbon double bond, wherein:
a content of the metal hydroxide is 85 to 190 parts by mass relative to 100 parts by mass of the thermoplastic resin,
a content of the modified silicone is 0.05% to 5% by mass relative to the metal hydroxide,
the thermoplastic resin is a mixture containing an ethylene-vinyl acetate copolymer and polyethylene in a range of 30:70 to 100:0, and the modified silicone has a molecular weight of 1000 to 3000.

2. The flame-retardant resin composition according to Claim 1, wherein the thermoplastic resin is an ethylene-vinyl acetate copolymer.

3. The flame-retardant resin composition according to Claim 1 or Claim 2, wherein the metal hydroxide is magnesium hydroxide or aluminum hydroxide.

4. The flame-retardant resin composition according to Claim 3, wherein the content of the metal hydroxide is 100 to 180 parts by mass relative to 100 parts by mass of the thermoplastic resin.

5. The flame-retardant resin composition according to Claim 3, wherein the content of the metal hydroxide is 100 to 140 parts by mass relative to 100 parts by mass of the thermoplastic resin.

6. A flame-retardant heat-shrinkable tube obtained by inflating a tubular molded body in a radial direction, the tubular molded body being composed of the flame-retardant resin composition according to any one of Claims 1 to 5.

7. The flame-retardant heat-shrinkable tube according to Claim 6, wherein a printing process is performed on a surface of the tube.

8. A flame-retardant insulated electric wire comprising an insulating coating formed by using the flame-retardant resin composition according to any one of Claims 1 to 5.

9. The flame-retardant insulated electric wire according to Claim 8, wherein a printing process is performed on a surface of the electric wire.

## Patentansprüche

1. Flammhemmende Harzzusammensetzung, umfassend:
ein thermoplastisches Harz,
ein Metallhydroxid und
ein modifiziertes Silikon, bei dem es sich um ein Polymer mit einem Hauptgerüst handelt, das eine Siloxanbindung aufweist und an einem Ende davon eine funktionelle Gruppe mit einer Kohlenstoff-Kohlenstoff-Doppelbindung, wobei
ein Gehalt des Metallhydroxids 85 bis 190 Massenteile bezogen auf 100 Massenteile des thermoplastischen Harzes beträgt,
ein Gehalt des modifizierten Silikons 0,05 Massen-% bis 5 Massen-% bezogen auf das Metallhydroxid beträgt,
es sich bei dem thermoplastischen Harz um ein Gemisch handelt, das ein Ethylen-Vinylacetat-Copolymer und Polyethylen in einem Bereich von 30 : 70 bis 100 : 0 enthält, und
das modifizierte Silikon ein Molekulargewicht von 1000 bis 3000 aufweist.

2. Flammhemmende Harzzusammensetzung gemäß Anspruch 1, wobei es sich bei dem thermoplastischen Harz um ein Ethylen-Vinylacetat-Copolymer handelt.

3. Flammhemmende Harzzusammensetzung gemäß Anspruch 1 oder Anspruch 2, wobei es sich bei dem Metallhydroxid um Magnesiumhydroxid oder Aluminiumhydroxid handelt.

4. Flammhemmende Harzzusammensetzung gemäß Anspruch 3, wobei der Gehalt des Metallhydroxids 100 bis 180 Massenteile bezogen auf 100 Massenteile des thermoplastischen Harzes beträgt.

5. Flammhemmende Harzzusammensetzung gemäß Anspruch 3, wobei der Gehalt des Metallhydroxids 100 bis 140 Massenteile bezogen auf 100 Massenteile des thermoplastischen Harzes beträgt.

6. Flammhemmende wärmeschrumpfbare Röhre, erhalten durch Aufblasen eines röhrenförmigen Formkörpers in radialer Richtung, wobei der röhrenförmige Formkörper aus der flammhemmenden Harzzusammensetzung gemäß einem der Ansprüche 1 bis 5 besteht.

7. Flammhemmende wärmeschrumpfbare Röhre gemäß Anspruch 6, wobei ein Druckverfahren auf einer Oberfläche der Röhre ausgeführt wird.

8. Flammhemmender isolierter elektrischer Draht, umfassend eine isolierende Beschichtung, gebildet unter Verwendung der flammhemmenden Harzzusammensetzung gemäß einem der Ansprüche 1 bis 5.

9. Flammhemmender isolierter elektrischer Draht gemäß Anspruch 8, wobei ein Druckverfahren auf einer Oberfläche des elektrischen Drahtes ausgeführt wird.

## Revendications

1. Composition de résine ignifuge comprenant :
une résine thermoplastique ;
un hydroxyde métallique ; et
un silicone modifié étant un polymère ayant un squelette principal ayant une liaison siloxane et ayant, à une extrémité de celui-ci, un groupe fonctionnel ayant une double liaison carbone-carbone, dans laquelle :
une teneur de l'hydroxyde métallique est de 85 à 190 parties en masse par rapport à 100 parties en masse de la résine thermoplastique,
une teneur du silicone modifié est de 0,05 % à 5 % en masse par rapport à l'hydroxyde métallique,
la résine thermoplastique est un mélange contenant un copolymère d'éthylène-acétate de vinyle et du polyéthylène dans une plage de 30:70 à 100:0, et le silicone modifié a un poids moléculaire de 1000 à 3000.

2. Composition de résine ignifuge selon la revendication 1, dans laquelle la résine thermoplastique est un copolymère d'éthylène-acétate de vinyle.

3. Composition de résine ignifuge selon la revendication 1 ou la revendication 2, dans laquelle l'hydroxyde métallique est l'hydroxyde de magnésium ou l'hydroxyde d'aluminium.

4. Composition de résine ignifuge selon la revendication 3, dans laquelle la teneur de l'hydroxyde métallique est de 100 à 180 parties en masse par rapport à 100 parties en masse de la résine thermoplastique.

5. Composition de résine ignifuge selon la revendication 3, dans lequel la teneur de l'hydroxyde métallique est de 100 à 140 parties en masse par rapport à 100 parties en masse de la résine thermoplastique.

6. Tube thermorétractable ignifuge obtenu par gonflage d'un corps moulé tubulaire dans une direction radiale, le corps moulé tubulaire étant composé de la composition de résine ignifuge selon l'une quelconque des revendications 1 à 5.

7. Tube thermorétractable ignifuge selon la revendication 6, dans lequel un processus d'impression est effectué sur une surface du tube.

8. Fil électrique isolé ignifuge comprenant un revêtement isolant formé en utilisant la composition de résine ignifuge selon l'une quelconque des revendications 1 à 5.

9. Fil électrique isolé ignifuge selon la revendication 8, dans lequel un processus d'impression est effectué sur une surface du fil électrique.
